# NEUE EUROPÄISCHE PATENTSCHRIFT

(11) **EP 2 811 819 B2**
(45) Veröffentlichungstag und Bekanntmachung des Hinweises auf die Entscheidung über den Einspruch: **14.12.2022**
(45) Hinweis auf die Patenterteilung: 28.09.2016
(21) Anmeldenummer: 13703408.8
(22) Anmeldetag: 08.02.2013
(51) Int. Cl.: A01G 9/24, F24J 2/52

(54) **VERFAHREN ZUR SIMULTANEN KULTIVIERUNG VON NUTZPFLANZEN UND ENERGETISCHEN NUTZUNG VON SONNENLICHT**
METHOD FOR SIMULTANEOUSLY CULTIVATING CROP PLANTS AND UTILIZING THE ENERGY OF SUNLIGHT
PROCÉDÉ DE CULTURE SIMULTANÉE DE PLANTES UTILES ET D'UTILISATION ÉNERGÉTIQUE DE LA LUMIÈRE DU SOLEIL

(30) Priorität: 09.02.2012 DE 102012002551
(43) Veröffentlichungstag der Anmeldung: 17.12.2014
(73) Patentinhaber: Fraunhofer-Gesellschaft zur Förderung der angewandten Forschung e.V., 80686 München (DE)
(72) Erfinder: BOPP, Georg, 79219 Staufen (DE); GOETZBERGER, Adolf, 79249 Merzhausen (DE); OBERGFELL, Tabea, 79211 Denzlingen (DE); REISE, Christian, 79115 Freiburg (DE)
(74) Vertreter: Pfenning, Meinig & Partner mbB
(86) Internationale Anmeldenummer: PCT/EP2013/052589
(87) Internationale Veröffentlichungsnummer: WO 2013/117722

(56) Entgegenhaltungen:
- EP-A1- 2 037 194
- GOETZBERGER A; ZASTROW A.: "On the coexistence of solar-energy conversion and plant cultivation", INTERNATIONAL JOURNAL OF SOLAR ENERGY, Bd. 1, 1982, Seiten 55-69, XP002695560, in der Anmeldung erwähnt
- C. DUPRAZ ET AL.: "Combining solar photovoltaic panels and food crops for optimising land use: Towards new agrivoltaic schemes", RENEWABLE ENERGY, Bd. 36, 2011, Seiten 2725-2732, XP002695561, in der Anmeldung erwähnt
- Vorbenutzung, bestehend aus technischen Zeichnungen sowie Karten-, Kataster- und Satellitenansichten E3.1 - E3.10 des Agrovoltaik-Projekts der Einsprechenden in "Virgilio-Capelletta", Provinz Mantua (IT);
- Vorbenutzung, bestehend aus technischen Zeichnungen sowie Karten-, Kataster- und Satellitenansichten E4.1 - E4.10 des Agrovoltaik-Projekts der Einsprechenden in "Monticelli D?Ongina", Provinz Piacenza (IT);
- Vorbenutzung, bestehend aus technischen Zeichnungen sowie Karten-, Kataster- und Satellitenansichten E4.1 - E4.9 des Agrovoltaik-Projekts der Einsprechenden in "Castelvetro", Provinz Piacenza (IT)
- Pressespiegel der Einsprechenden mit Artikeln von 2010-2012 über die Projekte E3 bis E5

## Beschreibung

Die vorliegende Erfindung betrifft ein Verfahren zur simultanen Kultivierung von Nutzpflanzen und energetischen Nutzung von Sonnenlicht mittels einer Solarmodulanordnung, wobei die Solarmodule derart angeordnet werden, dass eine unterhalb der Solarmodule liegende Nutzfläche, auf der die Nutzpflanzen kultiviert werden können, partiell verschattet wird. Die erfindungsgemäße Ausrichtung der Solarmodule ermöglicht dabei eine Vergleichmäßigung der einfallenden Sonnenstrahlung auf unter den Solarmodulen angeordnete Nutzpflanzen.

In der am 01.07.2010 in Kraft getretenen Novellierung des Einspeisegesetzes für PV-Strom ist die Verwendung von Ackerflächen ausgeschlossen worden. Begründung ist vor allem, dass bei der Umwidmung dieser Flächen für PV wertvolle Anbauflächen für Nahrungsmittel und nachwachsende Rohstoffe verloren gehen. Um langfristig den elektrischen Energiebedarf der Bevölkerung zu decken werden Freiflächenanlagen als eine Möglichkeit angesehen, um entsprechende Energiemengen bereitstellen zu können.

Schon 1981 und 1982 [Goetzberger A, Zastrow A. "On the coexistence of solar-energy conversion and plant cultivation". International Journal of Solar Energy 1982; 1:55-69] veröffentlichte Berechnungen zeigen, dass nur etwa 30 - 40% der gesamten Jahressolarstrahlung auf die PV Module fallen. Der Rest fällt auf die darunter liegende Fläche und wäre für die Kultivierung der meisten Nutzpflanzen ausreichend. Insbesondere während der Wachstumsperiode der Pflanzen fällt die meiste Sonnenstrahlung zwischen den Modulreihen ein. An existierenden Anlagen beobachtet man üppiges, aber heute unerwünschtes Pflanzenwachstum.

Heute müssen diese natürlich wachsenden Pflanzen klein gehalten werden und erhöhen die Wartungskosten der Anlage. Allenfalls werden die Anlagenflächen als Schafweide genutzt. Die Voraussetzungen für die Doppelernte durch PV und Landwirtschaft sind folgende:
- Aufständerung der PV Generatoren mit ausreichend Abstand zwischen den Reihen
- Erhöhte Aufständerung, um gleichmäßige Bestrahlung der Grundfläche zu erreichen
- Die Aufständerung soll mechanische Bearbeitung des Bodens zulassen
- Gezielte Auswahl der Pflanzen: viele Pflanzen stellen bei zu hoher Bestrahlung das Wachstum ein oder gedeihen besser bei teilweiser Beschattung.

Inzwischen gibt es kleinere Versuche mit dem Doppelernte Konzept. Z.B. auf dem Gelände der Firma Elektro Guggenmoos ["Photovoltaik 09 / 20111 www.photovoltaik.eu"] unter niedrig aufgeständerten PV-Modulen. Sie zeigten beim Anbau von Weizen und verschiedenen Gemüsen sehr gute Ergebnisse. Auch in Südfrankreich wurde jüngst ein etwas größerer Versuch unternommen [C. Dupraz et al. "Combining solar photovoltaic panels and food crops for optimising land use: Towards new agrivoltaic schemes", Renewable Energy 36 (2011) 2725-2732)].

Aus dem Stand der Technik sind zudem zweiachsige Solartracker der Fa. REM-Tec bekannt.

Aufgabe dieser Erfindung ist die Optimierung des Pflanzenertrags bei gleichzeitigem möglichst gleichbleibendem elektrischem Ertrag.

Diese Aufgabe wird hinsichtlich eines Verfahrens zur simultanen Kultivierung von Nutzpflanzen und energetischen Nutzung von Sonnenlicht mit den Merkmalen des Patentanspruchs 1 gelöst. Zudem gibt Patentanspruch 11 Verwendungszwecke einer Solarmodulanordnung, die eine bestimmte Ausrichtung aufweist, an. Die jeweiligen abhängigen Patentansprüche stellen dabei vorteilhafte Weiterbildungen dar.

Erfindungsgemäß wird somit ein Verfahren zur simultanen Kultivierung von Nutzpflanzen und energetischer Nutzung von Sonnenlicht mittels einer Solarmodulanordnung angegeben, bei dem die Nutzpflanzen auf einer unterhalb von Sonnenlicht konvertierenden Modulen angeordneten Nutzfläche kultiviert werden, wobei die Module Bestandteil einer Solarmodulanordnung sind, die eine Mehrzahl einzelner, zu geradlinig verlaufenden Modulreihen angeordneter, Sonnenlicht konvertierender Module umfasst, wobei die Sonnenlicht konvertierenden Module innerhalb jeder Modulreihe planparallel angeordnet sind und die Modulreihen im Wesentlichen parallel oder vollständig parallel zueinander in einem vordefinierten Abstand d verlaufen, und das Sonnenlicht mittels der Solarmodulanordnung energetisch konvertiert wird, wobei die Ausrichtung α des geradlinigen Verlaufs der Modulreihen um mindestens 30° und maximal 80° von der Ost-West-Ausrichtung abweicht.

Die gezielte Ausrichtung einer Anlage nach Südosten oder Südwesten ist bisher in Verbindung mit Pflanzenanbau noch nicht eingesetzt worden. Allenfalls wurden die Modulreihen leicht aus der Südrichtung gedreht, um der Grundstückskontur oder Ausrichtung zu folgen, wie z. B. in "Photovoltaik 09 / 20111 www.photovoltaik.eu" oder C. Dupraz et al. "Combining solar photovoltaic panels and food crops for optimising land use: Towards new agrivoltaic schemes", Renewable Energy 36 (2011) 2725-2732) erwähnt.

Überraschenderweise konnten die Erfinder feststellen, dass eine derartig ausgerichtete Solarmodulanordnung das Pflanzenwachstum der unter der Solarmodulanordnung gedeihenden Pflanzen aufgrund einer Vergleichmäßigung des Lichteinfalls auf die Pflanze - verglichen mit Solarmodulanordnungen, deren Solarmodulreihen komplett in Ost-West-Ausrichtung angeordnet sind-deutlich begünstigt. Daneben erreicht bei einerderartigen Anordnung wesentlich mehr Licht die unter der Solarmodulanordnung gedeihenden Pflanzen. Gleichzeitig resultiert nur ein marginal geschmälerter Energieertrag der Solarmodule.

Die erfindungsgemäß verwendeten Begrifflichkeiten werden im nachfolgenden näher erläutert.

Unter einem das Sonnenlicht konvertierenden Modul wird eine Vorrichtung verstanden, die das Sonnenlicht einer energetischen Nutzung zuführen kann. Beispielsweise kann es sich hierbei um Module handeln, die die Umwandlung des Sonnenlichts in elektrische Energie, d.h. Spannung bzw. Strom, thermische Energie oder die Verwendung des Sonnenlichts zur Zucht von Pflanzen, d.h. die Umwandlung des Sonnenlichts in Biomasse ermöglichen.

Unter einer Modulreihe wird eine lineare Aneinanderreihung mindestens zweier Sonnenlicht konvertierender Module verstanden. Dabei wird jeweils ein Sonnenlicht konvertierendes Modul neben ein weiteres, z.B. an eine Seite eines weiteren, Sonnenlicht konvertierenden Moduls angeordnet, so dass die der Sonnenlicht zuweisende Oberfläche der einzelnen, in der Modulreihe enthaltenden Module, planparallel ausgerichtet ist.

Die Solarmodulanordnung gemäß der vorliegenden Erfindung repräsentiert die Gesamtheit aller enthaltenen, Sonnenlicht konvertierenden Module und Modulreihen. Die Solarmodulanordnung umfasst dabei mindestens zwei Modulreihen, die parallel zueinander verlaufen. Die parallele Ausrichtung der Modulreihen erfolgt dabei entlang der Richtung, in der die einzelnen Solarmodule in den einzelnen Modulreihen aneinandergereiht sind. Unter einem im Wesentlichen parallelen Verlauf der Modulreihen wird dabei eine gewisse Abweichung von der Parallelität des Verlaufs der Modulreihen verstanden, wobei sich die Modulreihen jedoch in der gesamten Solarmodulanordnung nicht tangieren oder überschneiden.

Beim erfindungsgemäßen Verfahren sind nunmehr sämtliche Modulreihen entlang der Aneinanderreihung der einzelnen Sonnenlicht konvertierenden Module innerhalb der Modulreihen linear, d.h. geradlinig verlaufend so ausgerichtet, dass dieser geradlinige Verlauf um mindestens 30° und maximal 80° von einer idealen Ost-West-Ausrichtung abweicht. Die Modulreihen verlaufen somit nicht in Ost-West-Richtung, sondern um die genannten Winkel hiervon abweichend.

In einer bevorzugten Ausführungsform weicht die Ausrichtung α des geradlinigen Verlaufs der Modulreihen um mindestens 30° und maximal 80°, bevorzugt um mindestens 30° und maximal 75°, weiter bevorzugt um mindestens 30° und maximal 70°, besonders bevorzugt um mindestens 35° und maximal 50° von der Ost-West-Ausrichtung ab.

Die jeweilige Abweichung der Modulreihen kann dabei in beide Richtungen von der Ost-West-Ausrichtung abweichen. Somit können die Modulreihen der einzelnen Solarmodule unter den voranstehend angegebenen Winkeln in die Süd-West-Ausrichtung (d.h. eine auf den Verlauf der Modulreihen angelegte Normale zeigt unter den oben genannten Winkeln nach Süd-West), aber auch in die Süd-Ost-Richtung ausgerichtet sein, wobei die Süd-West-Ausrichtung bevorzugt ist.

Die Drehung der Solarreihen bietet einen weiteren systemtechnischen Vorteil. Durch die große Zahl von Solaranlagen treten bereits an sehr sonnigen Tagen im Sommer in Süddeutschland Netzengpässe auf, die dazu führen, dass Strom zu negativen Preisen verkauft wird. Dieser Zustand kann im tageszeitlichen Verlauf dadurch abgemildert werden, dass man etwa gleich große Flächen jeweils nach Südosten oder Südwesten ausrichtet. Dann verschiebt sich die maximale Stromerzeugung mehr in die Morgen- oder Abendzeit.

Ferner ist es bevorzugt, wenn die einzelnen Modulreihen derart zueinander angeordnet sind, dass eine gewisse Lücke zwischen den einzelnen Modulreihen resultiert, d.h. dass zwischen den einzelnen Modulen jeweils zweier benachbarter Modulreihen zueinander ein gewisser Freiraum, in dem sich keine Solarmodule befinden, bestehen bleibt.

Hierbei ist es insbesondere bevorzugt, wenn die Sonnenlicht konvertierenden Module eine Breite b aufweisen, wobei für das Verhältnis des Abstands d der Modulreihen zur Breite b der Module 0,1 ≤ d/b ≤ 100, bevorzugt 1 ≤ d/b ≤ 50, weiter bevorzugt 2,5 ≤ d/b ≤ 25, besonders bevorzugt 2,5 ≤ d/b ≤ 10 gilt. Die Breite b der Module wird dabei quer zur geradlinigen Ausrichtung der Solarmodule innerhalb der Modulreihe gemessen und repräsentiert die absolute Ausdehnung eines Moduls unabhängig von einem Anstellwinkel, unter dem die Module ggf. verkippt sind.

Hierbei ist es möglich, dass die absolute Breite b der Module von 0,1 m bis 5 m, bevorzugt von 0,5 m bis 2,5 m, besonders bevorzugt von 0,8 bis 1,2 m beträgt.

Zudem ist es bevorzugt, wenn die Sonnenlicht konvertierenden Module einen Anstellwinkel β aufweisen, der mindestens 5° und maximal 85°, bevorzugt mindestens 10° und maximal 60°, weiter bevorzugt mindestens 15° und maximal 40°, besonders bevorzugt mindestens 20° und maximal 30° beträgt.

Für die Doppelernte ist es günstiger, den Neigungswinkel zu erhöhen, was möglich ist, wenn die Reihenabstände etwas größer werden. Das führt zu niedrigeren Stromerträgen im Hochsommer und höheren Erträgen in den Übergangsmonaten, was auch zur Netzentlastung beiträgt.

Die Sonnenlicht konvertierenden Module können dabei ausgewählt sein, aus der Gruppe bestehend aus Photovoltaikmodulen, thermischen Flachkollektoren, Modulen zur Biokonversion und/oder Modulen zur Algenzucht.

Weiter ist es vorteilhaft, wenn die Sonnenlicht konvertierenden Module teiltransparent sind, so dass nicht von den Modulen genutztes Sonnenlicht den darunter liegenden Nutzpflanzen zur Verfügung steht.

Eine weitere vorteilhafte Ausführungsform sieht vor, dass die Unterkante der Sonnenlicht konvertierenden Module, mindestens 3 m, bevorzugt 3 bis 12 m, besonders bevorzugt mindestens 3 bis 7 m oberhalb der Nutzfläche angeordnet sind.

Erfindungsgemäß ist vorgesehen, dass die Modulreihen fest installiert sind oder einachsig nachführbar sind, wobei bei einer einachsigen Nachführbarkeit der Anstellwinkel β der Module der Modulreihen variabel ist.

Ebenso ist es möglich, dass zumindest einige oder alle der Sonnenlicht konvertierenden Solarmodule innerhalb der jeweiligen Modulreihen beabstandet zueinander angeordnet sind, d.h. innerhalb einer Modulreihe Lücken vorhanden sind, an denen keine Module präsent sind. Auch dadurch kann der Einfall von Sonnenlicht auf die Nutzpflanzen gesteigert werden.

Die Modulreihen selbst können dabei mittels feststehenden Stützen oder mittels zwischen zwei Masten aufgespannten Seilen fixiert sein.

Es ist erfindungsgemäß möglich, die Solarmodulanordnung bspw. über landwirtschaftlich genutzten Nutzflächen oder auf dem Dach eines Gewächshauses anzuordnen, oder über Obstplantagen zu installieren.

Hierbei kann die gleichzeitige Kultivierung von Nutzpflanzen und energetische Nutzung von Sonnenstrahlung erfolgen und/oder der Ernteertrag von Nutzpflanzen verglichen mit Nutzpflanzen, die unter einer Solarmodulanordnung mit in vollständiger Ost-West-Richtung ausgerichteten Modulreihen kultiviert sind, erhöht werden.

Als erfindungsgemäß kultivierbare Nutzpflanzen sind dabei sämtliche Nutzpflanzen einsetzbar. Insbesondere eignet sich das erfindungsgemäße Verfahren für C3-Pflanzen und C4-Pflanzen, wobei C3-Pflanzen besser geeignet sind, da Lichtsättigung bei geringerer Strahlung erreicht werden kann.

Ebenso können Sommerkulturen als auch Winterkulturen geeignet sein, wobei Sommerkulturen zu bevorzugen sind, da mit der erfindungsgemäß angeordneten Solarmodulanordnung die Sommerkulturen insbesondere vor im Sommer auftretenden Strahlungsstress geschützt werden können.

Ebenso ist es möglich, sowohl Gemüse als auch Getreide unterhalb der Solarmodulanordnung zu kultivieren, wobei insbesondere Gemüse zu bevorzugen ist.

Die Nutzpflanzen können dabei in Reihen als auch flächig angepflanzt werden, wobei eine Kultivierung in Reihen vorteilhaft ist, da die Anordnungen von Pflanzen- und Modulreihen miteinander abgestimmt werden können.

Insbesondere eignen sich die folgenden Nutzpflanzen zur Kultivierung unterhalb der erfindungsgemäßen Solarmodulanordnung:
Ackerbohnen, Leguminosen, Kartoffel, Hopfen, Spinat, Gartensalate (Kopf-, Romana-, Schnitt-, Krachsalat), Feldsalat, Rucola, Gerste, Triticale, Roggen, Hafer, Gerste, Raps und Rübsen, Lein, Erbsen, Lupinen, Möhren, Sellerie, Rettich, Spargel, Grünkohl, Kohlrabi, Wirsing, Chinakohl, Mangold, Zichorien (Endivie, Radicchio, Chicorée), Gurken (Schäl-, Einlegegurken), Grüne Pflückbohnen, Zwiebeln, Lauch, Rhododendron, Weizen, Dinkel, Buchweizen, Mais, Hirsen, Sonnenblume, Beta-Rüben (Zuckerrüben, Futterrüben, Rote Beete), Brassica-Rüben (Speise-, Steckrüben), Obstkulturen (Apfel, Birne, Kirsche, Pflaumen), Wein, Rhabarber, Blumenkohl, Rosenkohl, Brokkoli, Weißkohl, Rotkohl, Speisekürbisse, Petersilie, Tomaten, Erdbeere.

Erfindungsgemäß wird ebenso die Verwendung einer Solarmodulanordnung angegeben, die eine Mehrzahl einzelner, zu geradlinig verlaufenden Modulreihen angeordneter, Sonnenlicht konvertierender Module umfasst, wobei die Sonnenlicht konvertierenden Module innerhalb jeder Modulreihe planparallel angeordnet sind und die Modulreihen im Wesentlichen parallel oder vollständig parallel zueinander in einem vordefinierten Abstand d verlaufen, bei der die Ausrichtung α des geradlinigen Verlaufs der Modulreihen um mindestens 30° und maximal 80° von der Ost-West-Ausrichtung abweicht, zur Vergleichmäßigung des Lichteinfalls auf eine unterhalb der Solarmodulanordnung liegende Nutzfläche.

Die vorliegende Erfindung wird anhand der nachfolgend beigefügten Figuren sowie den weiteren Ausführungen näher erläutert, ohne die Erfindung auf die dargestellten Parameter zu beschränken.

Hierbei zeigt:

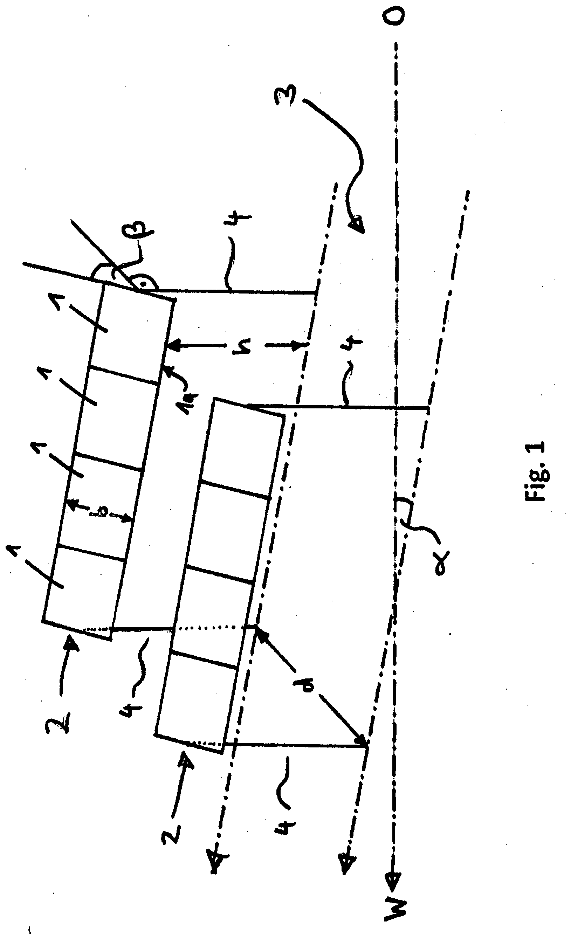

- Figur 1: eine für das erfindungsgemäße Verfahren ausgerichtete Solarmodulanordnung.

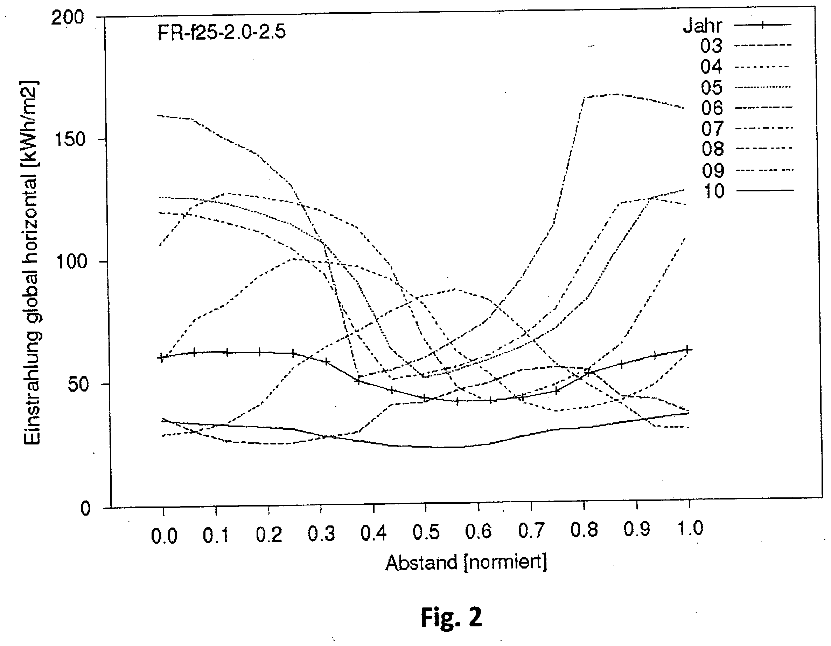

- Figur 2: Monatssummen der Einstrahlung von Sonnenlicht am Boden für Freiburg mit einer fest installierten Solarmodulanordnung mit einem Anstellwinkel von 25°, wobei die einzelnen Modulreihen geradlinig in Ost-West-Ausrichtung verlaufen und die einzelnen Module 2 m über dem Boden bei 2,5 m Reihenabstand angeordnet sind.

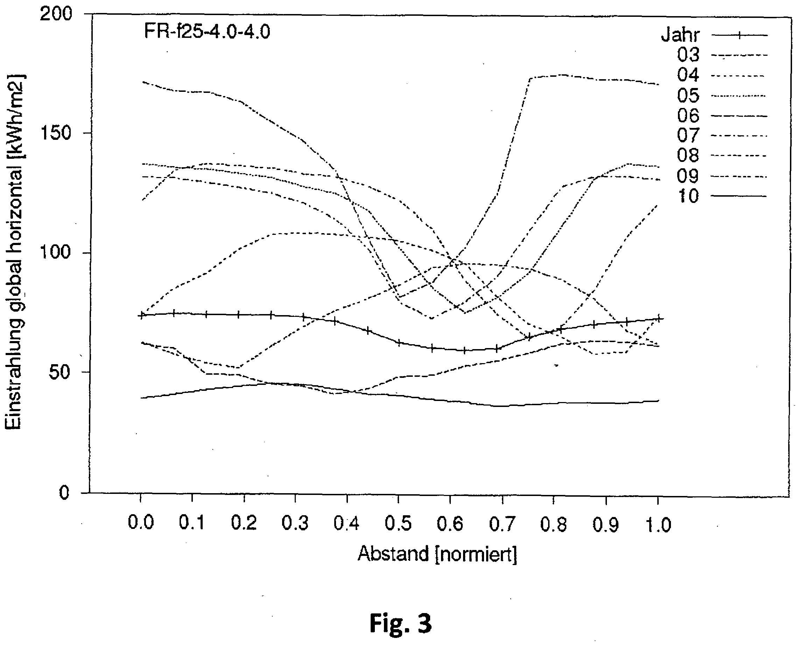

- Figur 3: Monatssummen der Einstrahlung von Sonnenlicht am Boden für Freiburg mit einer fest installierten Solarmodulanordnung mit einem Anstellwinkel von 25°, wobei die einzelnen Modulreihen geradlinig in Ost-West-Ausrichtung verlaufen und die einzelnen Module 4 m über dem Boden bei 4,0 m Reihenabstand angeordnet sind.

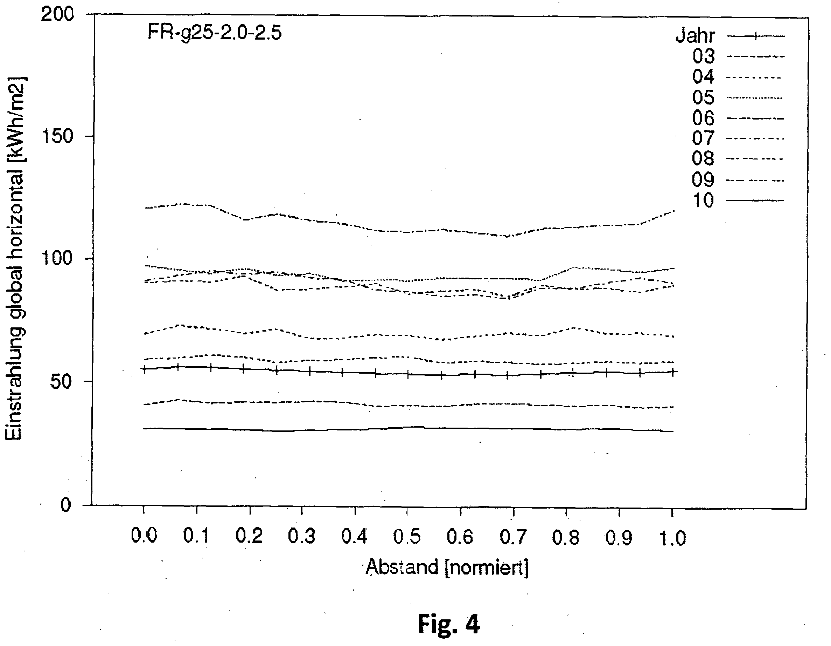

- Figur 4: Monatssummen der Einstrahlung von Sonnenlicht am Boden für Freiburg mit einer fest installierten Solarmodulanordnung mit einem Anstellwinkel von 25°, wobei die einzelnen Modulreihen geradlinig in Süd-Ost-Ausrichtung (45° Abweichung von idealer Ost-West-Ausrichtung) verlaufen und die einzelnen Module 2 m über dem Boden bei 2,5 m Reihenabstand angeordnet sind.

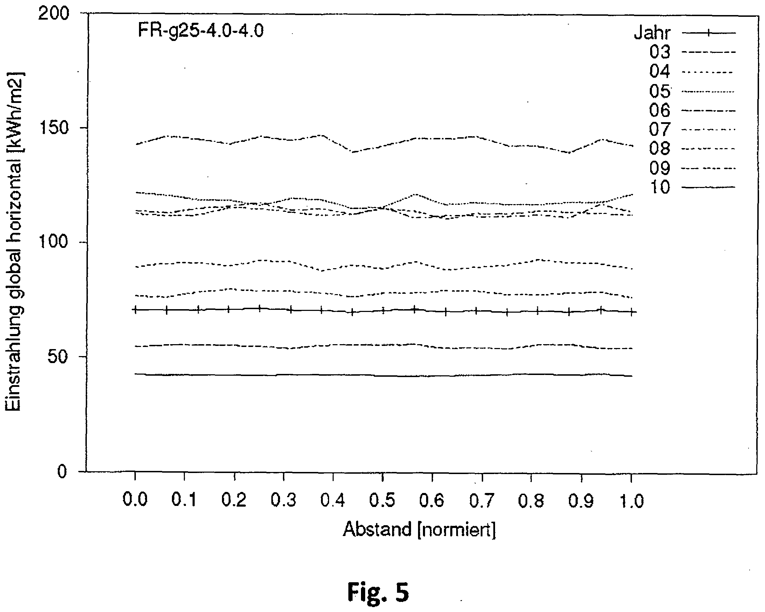

- Figur 5: Monatssummen der Einstrahlung von Sonnenlicht am Boden für Freiburg mit einer fest installierten Solarmodulanordnung mit einem Anstellwinkel von 25°, wobei die einzelnen Modulreihen geradlinig in Süd-Ost-Ausrichtung (45° Abweichung von idealer Ost-West-Ausrichtung) verlaufen und die einzelnen Module 4 m über dem Boden bei 4,0 m Reihenabstand angeordnet sind.

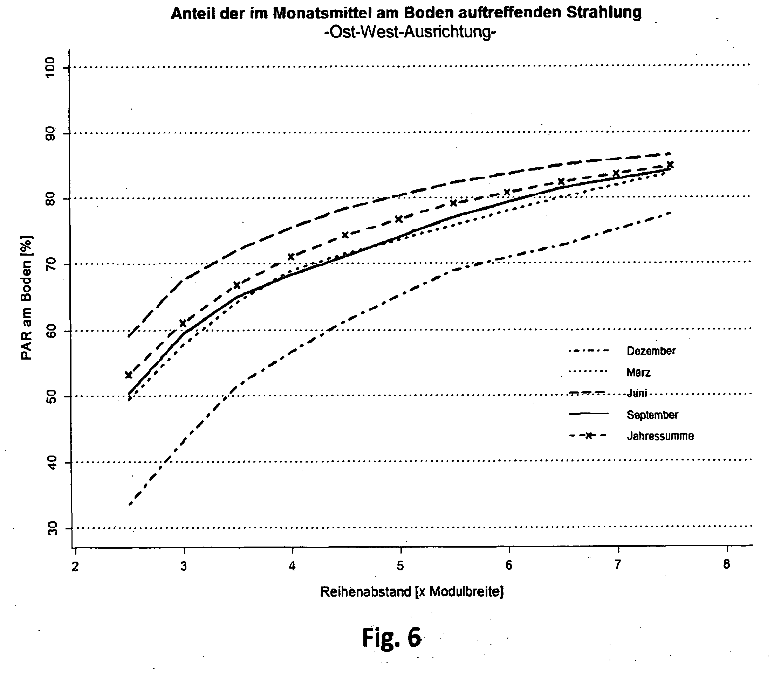

- Figur 6: den Anteil der im Monatsmittel am Boden auftreffenden Sonnenstrahlung mit einer Solarmodulanordnung, deren Einzelmodule in 4 m Höhe über dem Boden angeordnet sind bei einer Ausrichtung der einzelnen Modulreihen in OstWest-Ausrichtung.

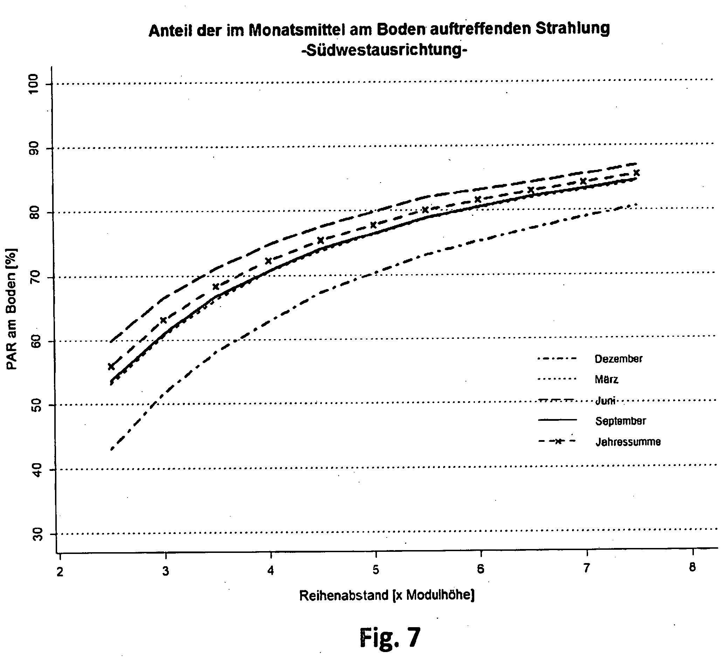

- Figur 7: den Anteil der im Monatsmittel am Boden auftreffenden Sonnentrahlung mit einer Solarmodulanordnung, deren Einzelmodule in 4 m Höhe über dem Boden angeordnet sind bei einer Ausrichtung der einzelnen Modulreihen in Süd-WestAusrichtung (45° Abweichung von idealer Ost-WestAusrichtung).

Figur 1 zeigt eine erfindungsgemäße Solarmodulanordnung, die zwei parallel zueinander ausgerichtete Modulreihen 2 aufweist, die jeweils vier einzelne Solarmodule 1 umfassen. Die einzelnen Modulreihen 2 sind in dem beispielhaft in Figur 1 dargestellten Fall mittels jeweils zwei Stützen 4 über dem Boden bzw. der Nutzfläche 3 aufgestellt. Die Solarmodule 1 der jeweiligen Modulreihen 2 sind dabei planparallel zueinander angeordnet und unter einem Anstellwinkel β geneigt. Durch die Höhe der Stützen 4 resultiert eine Höhe h der Unterkante 1a der unter einem Winkel β verkippt angeordneten Solarmodule 1. Die Solarmodule 1 weisen dabei jeweils eine Breite b auf, während die einzelnen Modulreihen in einem Abstand d voneinander beabstandet und parallel zueinander geführt angeordnet sind. Die einzelnen Modulreihen 2 sind nunmehr derart angeordnet, dass sie von einer idealen Ost-West-Ausrichtung um einen Winkel α verdreht abweichend sind, d.h. der geradlinige Verlauf der einzelnen Module 1 innerhalb der Modulreihen 2 um den entsprechenden Winkel α von einer idealen Ost-West-Ausrichtung (O→ W) abweicht. Eine derartige Ausrichtung ist mit den gepunkteten Pfeilen in Figur 1 dargestellt. Die in Figur 1 dargestellte Solarmodulanordnung ist jedoch beliebig erweiterbar, so können beispielsweise die einzelnen Modulreihen 2 mehr als die vier dargestellten Solarmodule umfassen, ebenso kann die Solarmodulanordnung weitere Modulreihen 2 aufweisen.

Die Erfinder haben umfangreiche Strahlungssimulationen durchgeführt, die überraschende Erkenntnisse hinsichtlich des Zusammenhangs zwischen der Anordnung und Ausrichtung der einzelnen Module innerhalb der Solarmodulanordnung und Stärke und Gleichförmigkeit der Sonnenstrahlung am Boden führten.

Die Ergebnisse dieser Simulationen und der Rechenweg werden in den folgenden Figuren dargestellt.

Zur Berechnung der solaren Einstrahlung am Boden, zwischen und unter den Modulreihen, wird das Strahlverfolgungs-Programm "Radiance" (Ward, G. and Shakespeare, R.A., 1998. Rendering with Radiance. The Art and Science of Lighting Visualization. Morgan Kaufmann Publishers, 664 pp,ISBN 0-9745381-0-8, www.radiance-online.org) eingesetzt. In diesem Programm wird ein geometrisches Modell eines 100 m x 100 m großen Modulfelds aus einzelnen Modulreihen erstellt. Die einzelnen Reihen von je 100 m Länge bestehen aus quer montierten Standardmodulen von rund 1 m Breite (b). Der Reihen-Achsabstand (d) ist einer der Modellparameter und wird zwischen 2,5 m und 7,5 m variiert. Aus einem meteorologischen Datensatz liest Radiance Werte der solaren Direkt und Diffusstrahlung auf eine horizontale Fläche ein. Dieser vom Satel-Light-Server bezogene Datensatz umfasst nach einer Filterung halbstündliche Werte für alle Zeiten des Jahres 2000, in denen Tageslicht verfügbar ist. Dies sind knapp 8900 Zeitschritte. Für jeden dieser Zeitschritte wird die horizontale Einstrahlung entlang eines Profils in 10 cm Höhe über dem Erdboden in der Mitte des Modulfelds (von Süd nach Nord von der Vorderkante einer Modulreihe bis zur Vorderkante der folgenden Modulreihe) berechnet. Randeffekte spielen damit für die Auswertung keine Rolle. Die Figuren 2 bis 5 fassen diese Daten für einige ausgewählte geometrische Konfigurationen zusammen. Die entsprechenden Grafiken für alle gerechneten Varianten finden sich im Anhang dieses Berichts. Die x-Achse zeigt jeweils den Abstand vom Anfang einer Modulreihe zum Anfang der nächsten, jeweils auf 0...1 normiert. Links in der Grafik ist Süden, rechts Norden. Die y-Achse zeigt jeweils die Monatssumme der am Boden eintreffenden Einstrahlung (global horizontal, also das, was ein waagerecht stehendes Pyranometer sehen würde) in der Einheit kWh/m². Es gibt eine Kurve für jeden Monat von März bis Oktober sowie eine Kurve für das ganze Jahr (hier sind die Werte durch 12 geteilt, damit sie in dieselbe Skala passen). Jede Grafik nennt in der linken oberen Ecke die vier wichtigsten Parameter:
- Standort (zur Zeit ausschließlich "FR" für Freiburg)
- Neigung ("f25" für fest 25 Grad geneigt, Ost-West-Ausrichtung der Modulreihen und "g25" für fest 25 Grad geneigt, südostgerichtet, d.h. 45° von der Ost-West-Ausrichtung abweichend
- Höhe der Unterkante PV-Modul über Boden (2,0 m oder 4,0 m)
- Achsabstand der PV-Modulreihen (von 2,5 m bis 7,5 m)

Die verschieden Kurvenverläufe zeigen also die Monatssummen der solaren Einstrahlung, die bei einer Pflanze - abhängig von ihrer Position unter bzw. zwischen jeweils zwei Modulreihen - auftreffen.

Die Simulationen zeigen für eine Anlage deren Modulreihen exakt in Ost-West-Richtung verlaufen, einen starken Einbruch der Strahlung zwischen den Modulen gerade in den strahlungsreichen Frühlings- und Sommermonaten (siehe Fig. 2 und 3). Man kann diesen Effekt dadurch erklären, dass die Sonnenbahnen im Sommer nahe am Kulminationspunkt verlaufen und dadurch die Beschattung durch eine Modulreihe sich zeitlich und örtlich nur wenig ändert. Das führt zu ungleichen Strahlungsbedingungen für die angebauten Pflanzen. Diese erreichen dadurch nicht zur gleichen Zeit die Erntereife, was die landwirtschaftliche Bearbeitung erschwert, wenn nicht unmöglich macht.

Wenn man die Module aus der Ost-West-Richtung herausdreht und nach Südost oder Südwest (z.B. jeweils 45°) ausrichtet ergibt sich eine örtlich nahezu konstante Strahlungsverteilung am Erdboden, wie die Figuren 4 und 5 zeigen. D.h. die angebauten Pflanzen werden gleichmäßig von der Sonne beschienen und erreichen gleichzeitig die Erntereife.

Ein weiterer Vorteil der Südost-, bzw. Südwestausrichtung ist in den Figuren 6 und 7 zu sehen: Die Pflanzen unter den Modulen erhalten bei dieser Anordnung wesentlich mehr Licht, als bei reiner Ost-West-Ausrichtung. Dies ist wichtig für Pflanzen, die im Herbst ausgesät werden, z.B. Wintergetreide.

Die Berechnungen zeigen weiterhin, dass durch diese Änderung der Ausrichtung überraschenderweise nur ein Verlust von etwa 5% an Elektrizitätsausbeute entsteht.

## Patentansprüche

1. Verfahren zur simultanen Kultivierung von Nutzpflanzen und energetischen Nutzung von Sonnenlicht mittels einer Solarmodulanordnung, bei dem die Nutzpflanzen auf einer unterhalb von Sonnenlicht konvertierenden Modulen (1) angeordneten Nutzfläche (3) kultiviert werden, wobei die Module (1) Bestandteil einer Solarmodulanordnung sind, die eine Mehrzahl einzelner, zu geradlinig verlaufenden Modulreihen (2) angeordneter, Sonnenlicht konvertierender Module (1) umfasst, wobei die Sonnenlicht konvertierenden Module (1) innerhalb jeder Modulreihe (2) planparallel angeordnet sind und die Modulreihen (2) im Wesentlichen parallel oder vollständig parallel zueinander in einem vordefinierten Abstand d verlaufen, und das Sonnenlicht mittels der Solarmodulanordnung energetisch konvertiert wird,
**dadurch gekennzeichnet,**
**dass** die Ausrichtung α des geradlinigen Verlaufs der Modulreihen (2) um mindestens 30° und maximal 80° von der Ost-West-Ausrichtung abweicht und die Modulreihen (2) fest installiert sind oder einachsig nachführbar sind, wobei der Anstellwinkel β der Module (1) der Modulreihen (2) variabel ist.

2. Verfahren nach Anspruch 1, **dadurch gekennzeichnet, dass** die Ausrichtung α des geradlinigen Verlaufs der Modulreihen (2) um mindestens 30° und maximal 75°, weiter bevorzugt um mindestens 30° und maximal 70°, besonders bevorzugt um mindestens 35° und maximal 50° von der Ost-West-Ausrichtung abweicht.

3. Verfahren nach einem der vorhergehenden Ansprüche, **dadurch gekennzeichnet, dass** die Sonnenlicht konvertierenden Module (1) eine Breite b aufweisen, wobei für das Verhältnis des Abstands d der Modulreihen (2) zur Breite b der Module 0,1 ≤ d/b ≤ 100, bevorzugt 1 ≤ d/b ≤ 50, weiter bevorzugt 2,5 ≤ d/b ≤ 25, , besonders bevorzugt 2,5 ≤ d/b ≤ 10 gilt.

4. Verfahren nach einem der vorhergehenden Ansprüche, **dadurch gekennzeichnet, dass** die Breite b der Module (1) von 0,1 m bis 5 m, bevorzugt von 0,5 m bis 2,5 m, besonders bevorzugt von 0,8 bis 1,2 m beträgt.

5. Verfahren nach einem der vorhergehenden Ansprüche, **dadurch gekennzeichnet, dass** die Sonnenlicht konvertierenden Modul (1) einen Anstellwinkel β aufweisen, der mindestens 5° und maximal 85°, bevorzugt mindestens 10° und maximal 60°, weiter bevorzugt mindestens 15° und maximal 40°, besonders bevorzugt mindestens 20° und maximal 30° beträgt.

6. Verfahren nach einem der vorhergehenden Ansprüche, **dadurch gekennzeichnet, dass** die Sonnenlicht konvertierenden Module (1) ausgewählt sind aus der Gruppe bestehend aus Photovoltaikmodulen, thermischen Flachkollektoren, Modulen zur Biokonversion und/oder Modulen zur Algenzucht.

7. Verfahren nach einem der vorhergehenden Ansprüche, **dadurch gekennzeichnet, dass** die Sonnenlicht konvertierenden Module (1) teiltransparent sind.

8. Verfahren nach einem der vorhergehenden Ansprüche, **dadurch gekennzeichnet, dass** die Unterkante (1a) der Sonnenlicht konvertierenden Module (1), mindestens 3 m, bevorzugt 3 bis 12 m, besonders bevorzugt mindestens 3 bis 7 m oberhalb der Nutzfläche (3) angeordnet sind.

9. Verfahren nach einem der vorhergehenden Ansprüche, **dadurch gekennzeichnet, dass** die Modulreihen (2) mittels feststehenden Stützen (4) oder mittels zwischen zwei Masten aufgespannten Seilen fixiert sind.

10. Verfahren nach einem der vorhergehenden Ansprüche, **dadurch gekennzeichnet, dass** die Solarmodulanordnung über landwirtschaftlich genutzten Nutzflächen (3) oder auf dem Dach eines Gewächshauses angeordnet ist, oder über Obstplantagen zu installieren

11. Verwendung einer Solarmodulanordnung, die eine Mehrzahl einzelner, zu geradlinig verlaufenden Modulreihen (2) angeordneter, Sonnenlicht konvertierender Module (1) umfasst, wobei die Sonnenlicht konvertierenden Module (1) innerhalb jeder Modulreihe (1) planparallel angeordnet sind und die Modulreihen (2) im Wesentlichen parallel oder vollständig parallel zueinander in einem vordefinierten Abstand d verlaufen, bei der die Ausrichtung α des geradlinigen Verlaufs der Modulreihen (2) um mindestens30° und maximal 80° von der Ost-West-Ausrichtung abweicht, zur Vergleichmäßigung des Lichteinfalls auf eine unterhalb der Solarmodulanordnung liegende Nutzfläche (3) und die Modulreihen (2) fest installiert sind oder einachsig nachführbar sind, wobei der Anstellwinkel β der Module (1) der Modulreihen (2) variabel ist.

12. Verwendung nach vorhergehendem Anspruch zur gleichzeitigen Kultivierung von Nutzpflanzen und energetischen Nutzung von Sonnenstrahlung.

13. Verwendung nach einem der beiden vorhergehenden Ansprüche zur Erhöhung des Ernteertrages von unter Solarmodulanordnungen kultivierten Nutzpflanzen.

14. Verwendung nach einem der Ansprüche 11 bis 13 zur Vergleichmäßigung des Zeitpunktes der Erntereife von unter Solarmodulanordnungen kultivierten Nutzpflanzen.

15. Verwendung nach einem der Ansprüche 11 bis 14 zur Erhöhung des Lichteinfalls auf unter Solarmodulanordnungen kultivierten Nutzpflanzen.

## Claims

1. Method for simultaneous cultivation of crop plants and energy-related use of sunlight by means of a solar module arrangement, in which the crop plants are cultivated on a useable surface (3) arranged below modules (1) which convert sunlight, wherein the modules (1) are a component of a solar module arrangement which comprises a plurality of individual modules (1) which are arranged to form module rows (2) running in straight lines and which convert sunlight, wherein the modules (1) which convert sunlight are arranged plane-parallel within each module row (2) and the module rows (2) run substantially parallel or completely parallel to one another at a predefined distance d, and the sunlight is converted in an energy-related manner by means of the solar module arrangement,
**characterised in that**
the alignment α of the straight-line course of the module rows (2) deviates from the east-west alignment by at least 30° and a maximum of 80° and the module rows (2) are fixedly installed or are able to be tracked on a single axis, wherein the work angle β of the modules (1) of the module rows (2) is variable.

2. Method according to claim 1, **characterised in that** the alignment α of the straight-line course of the module rows (2) deviates from the east-west alignment by at least 30° and a maximum of 75°, more preferably by at least 30° and a maximum of 70°, particularly preferably by at least 35° and a maximum of 50°.

3. Method according to one of the preceding claims, **characterised in that** the modules (1) which convert sunlight have a width b, wherein, for the ratio of the distance d of the module rows (2) to the width b of the modules, 0.1≤d/b≤100, preferably 1≤d/b≤50, more preferably 2.5≤d/b≤25, particularly preferably 2.5≤d/b≤10 applies.

4. Method according to one of the preceding claims, **characterised in that** the width b of the modules (1) is from 0.1m to 5m, preferably from 0.5m to 2.5m, particularly preferably from 0.8 to 1.2m.

5. Method according to one of the preceding claims, **characterised in that** the modules (1) which convert sunlight have a work angle β which is at least 5° and a maximum of 85°, preferably at least 10° and a maximum of 60°, more preferably at least 15° and a maximum of 40°, particularly preferably at least 20° and a maximum of 30°.

6. Method according to one of the preceding claims, **characterised in that** the modules (1) which convert sunlight are selected from the group consisting of photovoltaic modules, thermal flat-plate collectors, modules for bioconversion and/or modules for algae cultivation.

7. Method according to one of the preceding claims, **characterised in that** the modules (1) which convert sunlight are partially transparent.

8. Method according to one of the preceding claims, **characterised in that** the lower edge (1a) of the modules (1) which convert sunlight are arranged at least 3m, preferably 3 to 12m, particularly preferably at least 3 to 7m, above the useable surface (3).

9. Method according to one of the preceding claims, **characterised in that** the module rows (2) are fixed by means of fixed supports (4) or by means of cables spanned between two masts.

10. Method according to one of the preceding claims, **characterised in that** the solar module arrangement is arranged over useable surfaces (3) used for agriculture or on the roof of a greenhouse, or are to be installed over orchards.

11. Use of a solar module arrangement which comprises a plurality of individual modules (1) which are arranged to form module rows (2) running in straight lines and which convert sunlight, wherein the modules (1) which convert sunlight are arranged plane-parallel within each module row (1) and the module rows (2) run substantially parallel or completely parallel to one another at a predefined distance d, at which the alignment α of the straight-line course of the module rows (2) deviates from the east-west alignment by at least 30° and a maximum of 80°, for homogenisation of the incidence of light onto a useable surface (3) lying beneath the solar module arrangement and the module rows (2) are fixedly installed or are able to be tracked on a single axis, wherein the work angle β of the modules (1) of the module rows (2) is variable.

12. Use according to the preceding claim for simultaneous cultivation of crop plants and energy-related use of solar radiation.

13. Use according to one of the two preceding claims for increasing the crop yield of crop plants cultivated under solar module arrangements.

14. Use according to one of claims 11 to 13 for homogenisation of the point in time of harvest maturity of crop plants cultivated under solar module arrangements.

15. Use according to one of claims 11 to 14 for increasing the incidence of light on crop plants cultivated under solar module arrangements.

## Revendications

1. Procédé de culture simultanée de plantes utiles et d'utilisation énergétique de la lumière du soleil au moyen d'un ensemble de modules solaires, dans lequel les plantes utiles sont cultivées sur une surface utile (3) disposée au-dessous de modules (1) convertissant la lumière du soleil, les modules (1) faisant partie intégrante d'un ensemble de modules solaires qui comprend une pluralité de modules (1) individuels convertissant la lumière du soleil disposés en rangées de modules (2) rectilignes, les modules (1) convertissant la lumière du soleil étant disposés de façon plane et parallèle à l'intérieur de chaque rangée de modules (2), et les rangées de modules (2) étant essentiellement parallèles ou totalement parallèles entre elles avec une distance d prédéfinie, et la lumière du soleil étant convertie de façon énergétique au moyen de l'ensemble de modules solaires,
**caractérisé en ce que**
l'orientation α du tracé rectiligne des rangées de modules (2) diverge d'au moins 30° et au maximum de 80° de l'orientation est-ouest et les rangées de modules (2) sont installées de façon fixe ou de façon asservie de manière uniaxiale, l'angle d'attaque β des modules (1) des rangées de modules (2) étant variable.

2. Procédé selon la revendication 1, **caractérisé en ce que** l'orientation α du tracé rectiligne des rangées de modules (2) diverge d'au moins 30° et au maximum de 75°, de façon plus préférée d'au moins 30° et au maximum de 70°, de façon particulièrement préférée d'au moins 35° et au maximum de 50° de l'orientation est-ouest.

3. Procédé selon l'une des revendications précédentes, **caractérisé en ce que** les modules (1) convertissant la lumière du soleil présentent une largeur b, le rapport de la distance d des rangées de modules (2) à la largeur b des modules étant de 0,1 ≤ d/b ≤ 100, de préférence de 1 ≤ d/b ≤ 50, de façon plus préférée de 2,5 ≤ d/b ≤ 25, de façon particulièrement préférée de 2,5 ≤ d/b ≤ 10.

4. Procédé selon l'une des revendications précédentes, **caractérisé en ce que** la largeur b des modules (1) est comprise entre 0,1 m et 5 m, de préférence entre 0,5 et 2,5 m, de façon particulièrement préférée entre 0,8 et 1,2 m.

5. Procédé selon l'une des revendications précédentes, **caractérisé en ce que** les modules (1) convertissant la lumière du soleil présentent un angle d'attaque β qui est d'au moins 5° et au maximum de 85°, de préférence d'au moins 10° et au maximum de 60°, de façon plus préférée d'au moins 15° et au maximum de 40°, de façon particulièrement préférée d'au moins 20° et au maximum de 30°.

6. Procédé selon l'une des revendications précédentes, **caractérisé en ce que** les modules (1) convertissant la lumière du soleil sont sélectionnés dans le groupe constitué de modules photovoltaïques, de capteurs plats thermiques, de modules de bioconversion et/ou de modules de culture d'algues.

7. Procédé selon l'une des revendications précédentes, **caractérisé en ce que** les modules (1) convertissant la lumière du soleil sont partiellement transparents.

8. Procédé selon l'une des revendications précédentes, **caractérisé en ce que** l'arête inférieure (1a) des modules (1) convertissant la lumière du soleil est disposée à au moins 3 m, de préférence entre au moins 3 et 12 m, de façon particulièrement préférée entre au moins 3 et 7 m au-dessus de la surface utile (3).

9. Procédé selon l'une des revendications précédentes, **caractérisé en ce que** les rangées de modules (2) sont fixées au moyen d'appuis fixes (4) ou au moyen de câbles tendus entre deux mâts.

10. Procédé selon l'une des revendications précédentes, **caractérisé en ce que** l'ensemble de modules solaires est disposé au-dessus de surfaces utiles (3) à usage agricole ou sur le toit d'une serre ou est destiné à être installé au-dessus de plantations d'arbres fruitiers.

11. Utilisation d'un ensemble de modules solaires qui comprend une pluralité de modules (1) individuels convertissant la lumière du soleil disposés en rangées de modules (2) rectilignes, les modules (1) convertissant la lumière du soleil étant disposés de façon plane et parallèle à l'intérieur de chaque rangée de modules (1), et les rangées de modules (2) étant essentiellement parallèles ou totalement parallèles entre elles avec une distance d prédéfinie, dans laquelle l'orientation α du tracé rectiligne des rangées de modules (2) diverge d'au moins 30° et au maximum de 80° de l'orientation est-ouest pour l'homogénéisation de l'incidence de lumière sur une surface utile (3) située au-dessous de l'ensemble de modules solaires et les rangées de modules (2) sont installées de façon fixe ou de façon asservie de manière uniaxiale, l'angle d'attaque β des modules (1) des rangées de modules (2) étant variable.

12. Utilisation selon la revendication précédente pour la culture simultanée de plantes utiles et l'utilisation énergétique du rayonnement solaire.

13. Utilisation selon l'une des deux revendications précédentes pour l'augmentation du rendement de la récolte de plantes utiles cultivées sous des ensembles de modules solaires.

14. Utilisation selon l'une des revendications à 13 pour l'homogénéisation du moment de la maturité de plantes utiles cultivées sous des ensembles de modules solaires.

15. Utilisation selon l'une des revendications 11 à 14 pour l'augmentation de l'incidence de lumière sur des plantes utiles cultivées sous des ensembles de modules solaires.
